# EUROPEAN PATENT APPLICATION

(11) **EP 4 472 066 A1**
(43) Date of publication of application: **04.12.2024**
(21) Application number: 23177131.2
(22) Date of filing: 03.06.2023
(51) Int. Cl.: H02S 30/10, H02S 40/34

(54) **FRAME-ATTACHED JUNCTION BOX FOR SOLAR CELL MODULES**

(71) Applicant: Meyer Burger (Switzerland) AG, 3645 Gwatt/Thun (CH)
(72) Inventor: CHRISTIAN RATH, Christian, 3604 Thun (CH)
(74) Representative: Kraus & Lederer PartGmbB

(57) **Abstract**

A junction box (1300) for attachment to a frame (1200) of a solar cell module (1000) is disclosed. The junction box (1300) can be fixed by contactless bonding to a solar cell module laminate of the solar cell module.

## Description

### TECHNICAL FIELD

The disclosure relates to a solar cell module and a method for manufacturing a solar cell module. A solar cell module may also be called a photovoltaic module.

### BACKGROUND

Junction boxes are required to allow for electrically connecting solar cell modules to a power grid. Typically, the junction box is provided on a backside of the solar cell module laminate comprising the solar cells. Often solar cell modules also require a frame to increase the mechanical stability of the solar cell module laminate and to allow for mounting the solar cell module on a support structure, for example, a roof of a building.

It has been proposed to attach the junction box to the frame.

For example, US 9,337,771 B2 provides a mounting bracket for a junction box utilized for a solar cell, a junction box with the mounting bracket, and the solar cell module. The mounting bracket for the junction box comprises a joint arm, an insert strip, and a hook. The insert strip comprises a first elastic strip connecting with the joint arm, a joint strip connecting with the first elastic strip and bending towards the joint arm, and a second elastic strip connecting with the joint arm. The insert strip is used for inserting into the frame. At least one of the first and the second elastic strips of the insert strip comprise a first elastic block.

The proposed mounting bracket requires additional handling during assembly of the known solar cell module. This may render manufacturing more complex and costly.

WO 2011/139648 A1 relates to a junction box for use in a solar cell module, a frame comprising the junction box, and a solar cell module comprising the junction box. The junction box may form a part of a section of the frame or the corner joints of the frame and extends along the edge of the cell panel. The junction box comprises: a body which comprises a clamping part and a containment part adapted for clamping the edge of the cell panel; a wiring board mounted in the containment part and having a connection line with at least one switching diode; a male connection cable connected to one connection of the connection line and comprising a plug; and a female connection cable connected to the other connection of the connection line and comprising a socket.

Using a junction box as part of the frame may result in a less rigid frame.

### SUMMARY

Hence, there may be a need for an improved method for manufacturing a solar cell module and an improved solar cell module.

Said need has been addressed with the subject-matter of the independent claims. Advantageous embodiments are described in the dependent claims.

Examples relate to a method for manufacturing a solar cell module. The method comprises providing a solar cell module laminate, wherein the solar cell module laminate includes a solar cell, a connecting wire having a contacting portion electrically contacting a solar cell contact of the solar cell, and a collecting portion of an interconnector crossing the connecting wire and electrically contacting the connecting wire, wherein the solar cell, the connecting wire and the collecting portion are arranged between a front side encapsulation layer (also simply referred to as encapsulant) a front side glass, a back side encapsulation layer and/or a back side protection layer; providing a frame, providing a junction box, wherein the junction box comprises a housing and a conductor. The method further includes at least partially accommodating the junction box in a recess of the frame such that a contacting interface between the conductor and an connection portion of the interconnector is arranged in a plane parallel to the solar cell.

The method may optionally further include contactless materially bonding the conductor to the connection portion of the interconnector. In another variant, materially bonding may not be required. For instance, a spring force may be used to fix the conductor to the connection portion of the interconnector (spring-force mediated contact). For this, the conductor of the junction box can be formed as a spring (e.g., leaf spring; arc-shaped) and thereby can be biased against the interconnector. Alternatively, a spring may be arranged adjacent to the conductor to push the conductor against the interconnector. A shape bias can be provided at the conductor and/or the interconnector to fix both elements so that they are in electrical contact with each other. In some scenarios, it is possible to combine materially bonding (specifically contactless materially bonding) with electrically contacting using a spring force.

Said method may allow for reliably manufacturing a solar cell module.

In some examples, the junction box may be attached to the frame before arranging the solar cell module laminate in the frame.

In other scenarios, the solar cell module laminate may be arranged in the frame after arranging the junction box on the solar cell module laminate.

Further examples may prescribe that the junction box is arranged in the frame after arranging the solar cell module laminate in the frame.

As a general rule, for contactless materially bonding, the energy source is not in direct solid-state contact with the bonding target site. Accordingly, it is possible to execute the contactless material bonding even after attaching the junction box to the frame and after arranging the solar cell module laminate in the frame. The energy source can be located outside of the housing of the junction box. This simplifies the attachment process. In particular, it becomes possible to first attach the junction box to the frame and then subsequently arrange the solar cell module laminate in the frame; then the contactless materially bonding can be executed.

Contactless materially bonding the conductor to the connection portion of the interconnector may comprise at least one of induction soldering, induction welding, laser welding, and/or electron beam welding. Contactless materially bonding may reduce the need to have current conducting portions of the solar cell module close to the outer surface of the solar cell module, where they may have to be covered with insulating material afterwards.

When using a spring force to bring into contact the conductor and the connection portion of the interconnector, a large degree of flexibility regarding whether the solar cell module laminate is attached to the frame before or after or together with the junction box is achievable. The mechanical mechanism automatically establishes the contact when both the junction box as well as the solar cell module laminate are attached to the frame.

In some scenarios, the interconnector is not required to be laterally led out of the solar cell module laminate; i.e., a connection portion of the interconnector is not folded back on an outer surface of the solar cell module laminate through openings in one or more layers at the backside outer surface of the solar cell module laminate (e.g., encapsulant and/or backsheet and/or backside glass). I.e., a scenario in which two portions of the interconnector are vertically offset (in a depth direction between front surface and back surface of the solar cell module laminate) is not required. Leading the connection portion of the interconnector out of the solar cell module laminate is not required; this simplifies the manufacturing process. Rather an opening may be provided in one or more outer layers of the solar cell module laminate, the opening arranged so that the connection portion of the interconnector (otherwise buried underneath the one or more outer layers, e.g., encapsulant - typically an adhesive foil - and a back-sheet and/or a backside glass) is exposed to the outside of the solar cell module laminate and can be contacted by a conductor of the junction box through the opening. In the disclosed scenarios, a single-layered interconnector can be used that has a flat connection portion that extends in the plane parallel to the surface of the solar cell module laminate. This simplifies the manufacturing process and enables compact dimensions of the solar cell module laminate. An opening can be provided in the respective outer layer of the solar cell module so that the connection portion of the interconnector can be contacted by respective conductors of the junction box. Such opening can extend through one or more layers of the solar cell module laminate (e.g., encapsulant and backsheet or backside glass) underneath which the interconnector is buried.

Further examples describe a solar cell module. The solar cell module may be manufactured according to a method as previously described. The solar cell module comprises a solar cell module laminate including a solar cell, a connecting wire having a contacting portion electrically contacting a solar cell contact of the solar cell, and a collecting portion of an interconnector crossing the connecting wire and electrically contacting the connecting wire, wherein the solar cell, the connecting wire and the collecting portion are arranged between a front side encapsulation layer and a back side encapsulation layer, a frame, a junction box, wherein the junction box comprises a housing and a conductor, wherein the junction box is at least partially accommodated in a recess of the frame, wherein the conductor is in electrical contact with a connection portion of the interconnector, wherein a contacting interface between the conductor and the connection portion is arranged in a plane parallel to the solar cell, wherein the junction box abuts the solar cell module laminate and the frame.

In some scenarios, the housing may be lid free. This may render the construction of the housing simpler. Further, it may reduce the risk of intrusion of humidity in the housing and, thus, prolong the lifetime of the solar cell module.

Examples may prescribe that the housing comprises a collar facing the solar cell module laminate. The collar may enhance the distance to current conducting elements of the solar cell module.

The housing and the solar cell module laminate may surround the conductor. Hence, the conductor may be sealed from the ambient.

In some scenarios, the solar cell module laminate may be held in a groove of the frame, wherein an opening of the groove is directed to a centre of the solar cell module.

The frame may comprise an extruded frame bar. This may render the solar cell module suitable for production in large numbers. For example, the frame may be made from aluminium. Aluminium may be suitable material due to its favourable relation between mechanical strength and weight.

In the alternative or in addition, at least portions of the frame may be formed by injection moulding. Forming at least portions of the frame by injection moulding may render manufacture of the solar cell module particularly suitable for mass production. The frame may be made from a polymer. In particular, the frame may be made from a fibre reinforced plastic.

The recess for accommodating the junction box may be formed by milling, water jet cutting or laser cutting.

The frame may be configured to impede a movement of the junction box in a direction perpendicular to the solar cell module laminate. This may reduce the risk that the junction box becomes separated from the solar cell module laminate during the lifetime of the solar cell module. In addition, the frame may be configured to impede a movement of junction box in one or both directions parallel to the solar cell module laminate. The frame may also be configured to impede a rotation of the junction box with respect to the solar cell module laminate.

In particular, the junction box may be attached to the frame. In some scenarios, the junction box may be held in the frame in an interlocking manner. For example, the junction box may be held in the frame using a snap-fit, in particular a cantilever snap-fit.

In some examples, the housing comprises a cantilever for establishing the cantilever snap fit. Alternatively or in addition, the housing may comprise a protrusion for fixing the junction box in the frame in an interlocking manner.

In some scenarios, the housing comprises a filling opening for introducing a sealant between the junction box and the solar cell module laminate. This may allow for providing sealant in the cavity formed between the junction box and the surface of the solar cell module laminate, after the junction box has been put into the final position with respect to the solar cell module laminate. This may avoid smearing of sealant during manufacturing of the solar cell module laminate. The sealant may provide additional electrical insulation. The housing may further comprise a vent opening. The vent opening may allow air to move out of the cavity when the sealant is provided through the filling opening. Hence, the formation of bubbles may be avoided.

The housing may be made from an insulating material, in particular from a polymer. For example, the housing may be made by injection moulding. In some scenario, the conductor may be fixed in the housing during injection moulding.

A plane surface of the housing facing the solar cell module laminate may be aligned with a plane surface of the frame facing the solar cell module laminate. For example, the plane surface of the housing may be aligned with a plane surface of the groove of the frame in which the solar cell module laminate is arranged.

The junction box may comprise a bridging element, in particular a by-pass diode. Further, solar cell module may comprise a connection cable connected to the conductor of the junction box. The diode may, in particular, be arranged in a part of the junction box that is offset from the solar cell module laminate. Thereby, heat flow from the diode to the solar cell module laminate and the solar cells can be reduced.

### BRIEF DESCRIPTION OF THE DRAWINGS

Examples of the proposed solar cell module and the proposed method for manufacturing the solar cell module are now described with respect to the drawing in which:
Fig. 1A shows a portion of a solar cell module with an attached junction box (a housing of the junction box is shown transparent);
FIG. 1B is the same view as FIG. 1A, but the housing is omitted from view for better illustration;
Fig. 2 shows a portion of a frame with a junction box attached thereto;
Fig. 3 shows a portion of a frame and a junction box prior to attachment of the junction box to the frame.

### DETAILED DESCRIPTION

Hereinafter, techniques with respect to manufacturing solar cell modules and techniques with respect to solar cell module laminates and solar cell modules are disclosed. The techniques employ a junction box that is arranged in a recess in a frame of the solar cell module. This renders the solar cell module robust, because the junction box is less exposed than in other implementations in which the junction box is attached offset from the frame to the backside surface of the solar cell module laminate.

Various techniques are based on the finding that such arrangement of the junction box at the frame can in reference implementations render the manufacturing process more difficult if compared to those reference implementations. This is because the attachment of the frame to the solar cell module laminate correlates - due to the spatial proximity of the frame and the junction box - with the attachment of the junction box to the solar cell module laminate and the frame.

The design of the junction box, the solar cell module laminate and the frame enable efficient, simple, and high-throughput manufacturing. Fewer manufacturing steps are required. Robust solar cell modules are obtained that provide a reliable electrical connection between the conductor in the junction box and the solar cells of the solar cell module laminate. Heat transfer from one or more by-pass diodes in the junction box to the solar cell module laminate is reduced.

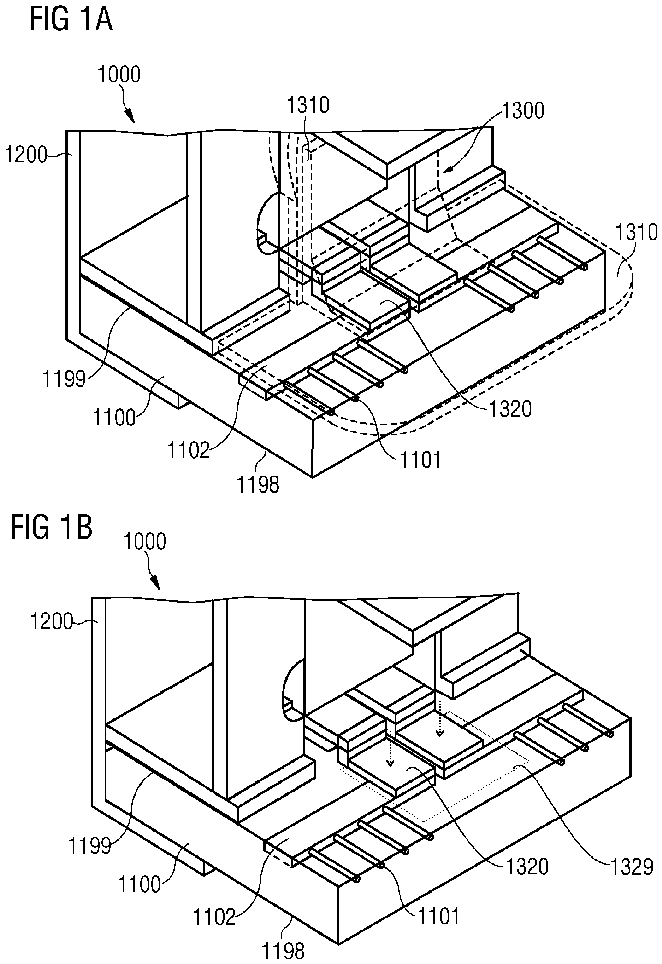

Fig. 1A (and similarly FIG. 1B) shows a portion of a solar cell module 1000. The solar cell module 1000 comprises a solar cell module laminate 1100, a frame 1200, and a junction box 1300 having a housing 1310.

The solar cell module laminate 1100 includes at least one solar cell (not shown), connecting wires 1101 having a contacting portion electrically contacting a solar cell contact of the solar cell, and an interconnector 1102, wherein a collection portion of the interconnector 1102 crosses the connecting wires 1101 and electrically contacts the connecting wires 1101 (the connecting wires 1101 and the interconnector 1102 are shown embedded into the solar cell module laminate 1100). The solar cell, the connecting wire 1101, and the collecting portion are arranged between a front side encapsulation layer and a back side encapsulation layer (the front surface 1198 and the back surface 1999 are shown). The solar cell module laminate 1100 may further include a front glass and a back sheet or a back glass (not shown in Fig. 1).

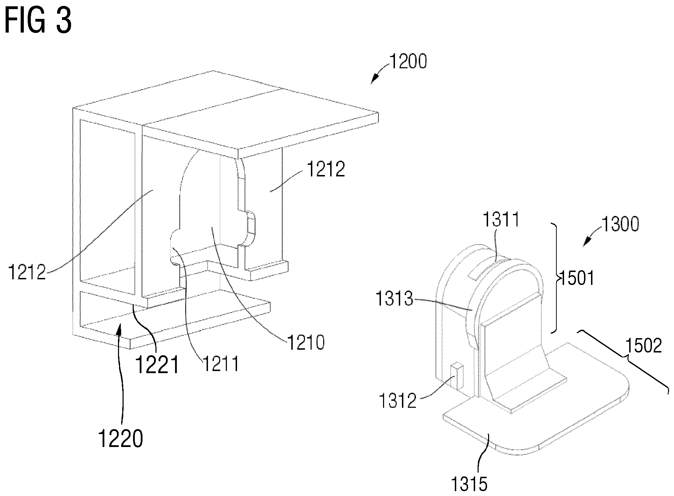

The junction box 1300 comprises the housing 1310 and a conductor 1320 and is at least partially accommodated in a recess of the frame 1200 (see Fig. 3). The conductor 1320 is in electrical contact with a connection portion of the interconnector 1102. This electrical contact can be firmly established, e.g., by a spring force and/or by using contactless materially bonding, as will be explained later on in further detail. A contacting interface between the conductor 1320 and the connection portion of the interconnector 1102 is arranged in a plane parallel to the solar cell, i.e., the solar cell module laminate. One or more layers of the solar cell module laminate 1100 beneath which the interconnector 1102 is buried (e.g., a backside encapsulation layer / encapsulant and a backsheet or backside glass) have an opening 1329 in the region of the connection portion; this exposes the connection portion of the interconnector 1102 and thus enables the direct electrical contact between the conductor 1320 and the interconnector 1102 (i.e., without a need of folding back lateral end portions of the interconnector 1102 protruding from the sides of the solar cell module laminate 1110 to be exposed at the back side of the solar cell module laminate 1110 as in prior-art solutions). The junction box 1300 abuts the solar cell module laminate 1100 and the frame 1200.

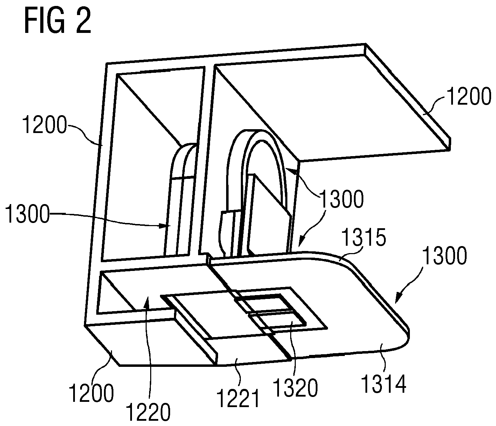

Fig. 2 shows the junction box 1300 attached to the frame 1200 before arranging the solar cell module laminate 1100 in the frame 1200. The solar cell module laminate 1100 may be later held in a groove 1220 of the frame 1200, wherein an opening of the groove 1220 is directed to a centre of the solar cell module 1000. The groove 1220 is arranged offset from the recess in which the junction box 1300 is arranged.

The frame 1200 may comprise an extrude frame bar and may be made from aluminium for example. The recess 1210 (see Fig. 3) for accommodating the junction box 1300 may be formed by milling, water jet cutting, or laser cutting.

The frame 1200 is configured to impede a movement of the junction box 1300 in a direction perpendicular to the solar cell module laminate 1100. In addition, the frame 1200 is configured to impede a movement of the junction box 1300 in both directions parallel to the solar cell module laminate 1100 ("in-plane movement") and, further, impede a rotation of the junction box 1300 with respect to the solar cell module laminate 1100. The junction box 1300 is attached to the frame 1200 in an interlocking manner using a snap-fit, more specifically a cantilever snap-fit. Heretofore, the housing 1310 of the junction box 1300 comprises a cantilever 1311 at a portion 1501 for attaching the junction box 1300 to the frame 1200 (see Fig. 3; where a further portion 1502 for attaching the junction box 1300 to the solar cell module laminate 1100 is shown). In addition, the housing 1310 comprises protrusions 1312, 1313 for fixing the junction box 1300 in the frame 1200 in an interlocking manner. In particular, the protrusion 1312 may be guided through the passage 1211. Afterwards, the junction box 1300 may be pushed downwards (towards the groove 1220), until the upper part of the housing 1310 is pushed into the recess 1210 and the cantilever 1311 snaps-in behind the wall 1212 of the frame 1200. Thus, the cantilever 1311 in combination with the protrusions 1312 prevents disengagement of the junction box 1300 from the frame 1200. Such interconnection is enabled by the portion 1501 extending perpendicular to and away from the plane defined by the contacting interface between the conductor 1320 of the junction box 1300 and the interconnector 1102 of the solar cell module laminate 1100. The junction box 1300 is "L-shaped" (see Fig. 3).

A respective method includes aligning protrusions of a junction box with guide features arranged at a side wall of a recess of a frame of a solar cell module, pushing the junction box into the recess in a first direction, upon the protrusions having passed the side wall of the recess, pushing the junction box into the recess in a second direction, until a snap fit attachment is established by a cantilever. The cantilever is provided with the junction box or the frame.

Referring to Fig. 2: A plane surface 1314 of the housing 1310 and plane surface 1221 of the frame 1200, in particular a plane surface 1221 of the groove 1220 of the frame 1200 may be aligned, e.g., a flush alignment. This may facilitate inserting the solar cell module laminate 1100 into the groove 1220 of the frame 1200. The plane surfaces 1221, 1314 may face the solar cell module laminate 1100 after insertion of the solar cell module laminate 1100 into the groove 1220. The conductor 1320 may protrude from the plane surface 1314 of the housing 1310. In particular, the conductor 1320 may exert a spring force on the connection portion of the interconnector 1102 of the solar cell module laminate 1100 (the direction of the spring force is illustrated by the dotted arrows in Fig. 1B). This may improve the electrical connection between the conductor 1320 and the interconnector 1102. To provide the spring force, the respective portion of the conductor 1320 can be formed as a leaf spring. Alternatively or additionally, a separate spring, e.g., a coil spring, or an elastic material can be provided at a side of the conductor 1320 opposite to the interconnector 1102, to thereby push the conductor 1320 against the interconnector 1102. In some scenarios, the spring force may allow for removing the need of materially bonding the conductor 1320 and the interconnector 1102. In other scenarios, it is possible to materially bond the conductor 1320 and the interconnector 1102. Specifically, it is possible to materially bond the conductor 1320 and the interconnector 1102 in a contactless manner. This enables to use a lid free housing of the junction box.

A collar 1315 of the housing 1310 may be provided, to increase the creepage distance between the environment and current conducting portions of the solar cell module 1000, in particular to the contacting interface between the conductor 1320 and the connection portion of the interconnector 1102.

The housing 1310 may comprise a filling opening (not shown) for introducing a sealant between the junction box 1300 and the solar cell module laminate 1100. The sealant may be introduced in the cavity formed by the housing 1310 and the solar cell module laminate 1100 after assembling the solar cell module 1000. The sealant may reduce the risk that moisture enters said cavity. The sealant may also provide additional insulation of the current-conducting conductor 1320 and interconnector 1102. Further, the housing 1310 may include a vent opening (not shown) allowing for air to escape, when sealant is introduced into the cavity via the filling opening.

The solar cell module 1000 may further comprise a connection cable connected to the conductor of the junction box 1300. The junction box 1300 may further comprise a bridging element, in particular a by-pass diode.

Summarizing, a junction box 1300 that is integrated into the frame 1200 of a solar cell module 1000 instead of being attached to the back of the solar cell module laminate 1100 is proposed. The proposed junction box 1300 may either be plugged into the frame 1200 before the solar cell module laminate 1100 is arranged in the frame 1200. However, it is also possible to insert the junction box 1300 into the frame 1200 after the solar cell module laminate 1100 has been placed in the frame 1200.

When inserting the solar cell module laminate 1100 into the frame 1200 (if the junction box 1300 has already been inserted before) or when the junction box 1300 is accommodated in a recess of the frame 1200 (if this is done after the solar cell module laminate 1100 has been placed in the frame 1200), the conductor 1320 of the junction box 1300 may electrically contact the interconnector 1102 of the solar cell module laminate 1100. For instance, this electrical contact can be established using one or more of the following techniques: spring bias; induction soldering, induction welding, laser welding, and/or electron beam welding. All these techniques do not require that the contact between the conductor 1320 and the interconnector 1102 is exposed to the surrounding when establishing the electrical contact.

Apart from the recess 1210, the construction of the frame 1200 does not require substantial changes with respect to known frames. The housing 1310 of the junction box 1300 may comprise a collar 1315 (or plate) at its base. Said collar 1315 covers the contacting interface between the conductor 1320 and the interconnector 1102. Further, the outer surface of the collar 1315 may ensure that required electrical creepage distances are maintained. The collar 1315 is typically made from plastic to provide insulation.

At the connection portion of the interconnector 1102 a cut-out in the outer layer(s) (encapsulation layer, back-sheet, glass) of the solar cell module laminate 1100 may be required. The cut-out may ensure that connection portion of the interconnector 1102 is exposed before assembling the solar cell module 1000. To avoid unintentionally covering said connection portion - for example with encapsulant during lamination - the connection portion may be temporarily covered with an adhesive tape that does not leave any residues when removed.

Before the solar cell module laminate 1100 is arranged in the frame 1200, a sealant track (e.g., a silicone track) may be drawn in an approximately U-shape around the exposed connection portion of the interconnector 1102, wherein the opening of the U is arranged such that the conductor 1320 does not come into contact with the silicone track when inserting the solar cell module laminate 1100 in the groove 1220 of the frame 1200. An amount of frame sealant (e.g., silicone) in the groove 1220 of the frame may be chosen such that when the solar cell module laminate 1100 is inserted into the frame 1200, the displace frame sealant closes the opening of the U. This may ensure that no water or other substances from the environment reach the contacting interface between the interconnector 1102 and the conductor 1320.

The proposed approach significantly simplifies the solar cell module production. In particular, some known process steps are eliminated. This includes, e.g., leading the connection portion of the interconnector to the outside of the solar cell module laminate and folding back the same. In some scenarios, welding can be dispensed with, because the electrical connection between the conductor in the junction box and the connection portion of the interconnector can be established by press fit/snap fit. Since the connection cable is no longer required to reach a junction box in the middle of the solar cell module, it has not to be fixed to the solar cell module during production.

Arranging the junction box in the frame leaves more surface of the solar cell module which can be used for collecting light increasing the efficiency of the solar cell module compared to a solar cell module having the same outer dimensions, in particular, in case of a bifacial solar cell module. Moreover, the omission of a junction box in the middle of the solar cell module may improve the aesthetic appearance of the solar cell module.

The examples described herein all have the advantage that bending of the end portion of the interconnector 1102 after laminating is avoided. This may severely facilitate the process for attaching the junction box. In case of a solar cell module including a front glass and a back sheet, end portions of the interconnector 1102 may no longer have to be led out of the solar cell module laminate 1100. The interconnector 1102 can be single-layered in the solar cell module laminate 1100. The connection portion of the interconnector 1102 is contacted by the conductor 1320 by forming an opening 1329 (cf. FIG. 1B; dotted lines) in one or more layers of the solar cell module laminate 1100 after lamination, e.g., in the glass back sheet and an encapsulation layer. The connection portion is arranged at ends of the interconnector 1102 in the illustrated example. In detail: certain prior-art solutions require end portions of the interconnector to be led out of the laminate and folded back to towards the back side of the laminate to establish the electrical contact with the conductor of the junction box. By providing an opening in the back sheet, the additional step of having to bend and fold back end portions of the interconnector is dispensed with. In the prior art, such bending of the end portions of the interconnector is required to insert the bent portion through an opening in the back sheet when the back sheet is attached to the charge-carrier separation layer when forming the solar cell module laminate. In such prior art implementations, after attaching the back sheet, the parts of the bent portion of the interconnector protruding from and extending away from the solar cell module laminate are folded back onto the outer surface of the solar cell module laminate. Thus, a flat double-layer interconnector 1102 is obtained when forming the solar cell module laminate 1100 (only in such flat geometry is it possible to execute the lamination process). After completing the lamination process, in the prior art, the outer part of the double-layer interconnector 1102 is again bent upwards so that it protrudes from the solar cell module laminate 1100 and extends into the junction box that is then attached. This complex process according to the prior art, including two folding steps of the interconnector 1102, is not required in the presented scenario

The solar cell module described herein may use the design and dimension of the junction boxes. In particular, the same junction boxes may be used for solar cell modules comprising a front glass and a back sheet and solar cell modules comprising a front glass and a back glass.

The proposed method for manufacturing the solar cell modules may have a higher process reliability. Passing angled end portions of interconnectors through openings of junction boxes and/or back sheets may be error prone. Errors may require complex post-processing and/or may reduce the yield of the solar cell modules. The positioning of the junction box with respect to the connection portions as proposed herein is less critical.

Summarizing, the following EXAMPLES have been disclosed:
EXAMPLE 1. Method for manufacturing a solar cell module (1000), the method comprising
   - providing a solar cell module laminate (1100),
      wherein the solar cell module laminate (1100) includes
         a solar cell,
         a connecting wire (1101) having a contacting portion electrically contacting a solar cell contact of the solar cell, and
         an interconnector (1102), a collecting portion of the interconnector (1102) crossing the connecting wire and electrically contacting the connecting wire,
      wherein the solar cell, the connecting wire (1101) and the collecting portion are arranged between a front side encapsulation layer and a back side encapsulation layer,
   - providing a frame (1200),
   - providing a junction box (1300),
      wherein the junction box (1300) comprises a housing (1310) and a conductor (1320),
   - at least partially accommodating the junction box (1300) in a recess (1210) of the frame (1200) such that a contacting interface between the conductor (1320) and a connection portion of the interconnector (1102) is arranged in a plane parallel to the solar cell, and
   - contactless materially bonding the conductor (1320) to the connection portion of the interconnector (1102).
EXAMPLE 2. Method for manufacturing a solar cell module (1000), the method comprising
   - providing a solar cell module laminate (1100),
      wherein the solar cell module laminate (1100) includes
         a solar cell,
         a connecting wire (1101) having a contacting portion electrically contacting a solar cell contact of the solar cell, and
         an interconnector (1102), a collecting portion of the interconnector (1102) crossing the connecting wire and electrically contacting the connecting wire,
      wherein the solar cell, the connecting wire (1101) and the collecting portion are arranged between a front side encapsulation layer and a back side encapsulation layer,
   - providing a frame (1200),
   - providing a junction box (1300),
      wherein the junction box (1300) comprises a housing (1310) and a conductor (1320),
   - at least partially accommodating the junction box (1300) in a recess (1210) of the frame (1200) such that a contacting interface between the conductor (1320) and a connection portion of the interconnector (1102) is arranged in a plane parallel to the solar cell,
      wherein the conductor (1320) and the connection portion of the interconnector (1102) are pressed against each other by a spring force.
EXAMPLE 3. Method for manufacturing a solar cell module (1000) according to EXAMPLE 1 or 2, wherein the junction box (1300) is attached to the frame (1200) before arranging the solar cell module laminate (1100) in the frame (1200).
EXAMPLE 4. Method for manufacturing a solar cell module (1000) according to EXAMPLE 1 or 2,
   wherein the solar cell module laminate (1100) is arranged in the frame (1200) after arranging the junction box (1300) on the solar cell module laminate (1100).
EXAMPLE 5. Method for manufacturing a solar cell module (1000) according to EXAMPLE 1 or 2,
   wherein the junction box (1300) is arranged in the frame (1200) after arranging the solar cell module laminate (1100) in the frame (1200).
EXAMPLE 6. Method for manufacturing a solar cell module (1000) according to EXAMPLE 1,
   wherein the contactless materially bonding comprises at least one of:
      - induction soldering,
      - induction welding,
      - laser welding, and/or
   electron beam welding.
EXAMPLE 7. Method for manufacturing a solar cell module (1000) according to any one of the preceding EXAMPLEs,
   wherein the connection portion of the interconnector (1102) is contacted by the conductor (1320) through an opening (1329) in one or more outer layers of the solar cell module laminate (1100).
EXAMPLE 8. Solar cell module (1000), in particular solar cell module (1000) manufactured according to a method for manufacturing a solar cell module (1000) according to any one of the preceding EXAMPLEs, the solar cell module (1000) comprising
   - a solar cell module laminate (1100) including a solar cell, a connecting wire (1101) having a contacting portion electrically contacting a solar cell contact of the solar cell, and
   - an interconnector (1102), a collecting portion of the interconnector (1102) crossing the connecting wire (1101) and electrically contacting the connecting wire (1101),
      wherein the solar cell, the connecting wire (1101) and the collecting portion are arranged between a front side encapsulation layer and a back side encapsulation layer,
   - a frame (1200),
   - a junction box (1300),

   wherein the junction box (1300) comprises a housing (1310) and a conductor (1320),
   wherein the junction box (1300) is at least partially accommodated in a recess (1210) of the frame (1200),
   wherein the conductor (1320) is in electrical contact with a connection portion of the interconnector (1102),
   wherein a contacting interface between the conductor (1320) and the connection portion of the interconnector (1102) is arranged in a plane parallel to the solar cell,
   wherein the junction box (1300) abuts the solar cell module laminate (1100) and the frame (1200).
EXAMPLE 9. Solar cell module (1000) according to EXAMPLE 8,
   wherein the housing (1310) is lid free.
EXAMPLE 10. Solar cell module (1000) according to EXAMPLE 8 or 9,
   wherein the housing (1310) comprises a collar (1315) facing the solar cell module laminate (1100).
EXAMPLE 11. Solar cell module (1000) according to any one of EXAMPLEs 8 to 10,
   wherein the conductor (1320) contacts the connection portion of the interconnector (1102) through an opening (1329) in one or more layers of the solar cell module laminate (1100), the one or more layers optionally comprising the back side encapsulation layer and a backsheet and/or backside glass.
EXAMPLE 12. Solar cell module (1000) according to any one of EXAMPLEs 8 to 11,
   wherein the interconnector (1102) is single-layered.
EXAMPLE 13. Solar cell module (1000) according to any one of EXAMPLEs 8 to 12,
   wherein the frame (1200) is configured to impede a movement of the junction box (1300) in a direction perpendicular to the solar cell module laminate (1100).
EXAMPLE 14. Solar cell module (1000) according to any one of EXAMPLEs 8 to 13,
   wherein the junction box (1300) is attached to the frame (1200).
EXAMPLE 15. Solar cell module (1000) according to EXAMPLE 14,
   wherein the junction box (1300) is held in the frame (1200) in an interlocking manner, in particular using a snap-fit, more particularly a cantilever snap-fit.
EXAMPLE 16. Solar cell module (1000) according to any one of EXAMPLEs 8 to 15,
   wherein a plane surface (1314) of the housing (1300) facing the solar cell module laminate (1100) is aligned with a plane surface (1221) of the frame (1200) facing the solar cell module laminate (1100), in particular with a plane surface of a groove (1220) of the frame (1200).
EXAMPLE 17. A junction box (1300) comprising a first portion (1501) to be attached to a frame (1200) of a solar cell module (1000) and a second portion (1502) to be attached to a solar cell module laminate (1100) of the solar cell module (1000).
EXAMPLE 18. The junction box (1300) according to EXAMPLE 17,
   wherein the first portion (1501) comprises multiple protrusions (1312) for fixedly arranging the junction box (1300) in the frame (1200) in an interlocking manner and for impeding relative translational and/or rotational movement of the junction box (1300) with respect to the frame (1200).
EXAMPLE 19 The junction box (1300) according to EXAMPLE 17 or 18,
   wherein the first portion (1501) of the junction box (1300) comprises a cantilever (1311) configured to establish a snap-fit attachment of the junction box (1300) to the frame (1200).
EXAMPLE 20. The junction box (1300) according to EXAMPLE 18 and 19,
   wherein the cantilever (1311) and the multiple protrusions (1312) are relatively arranged to prevent disengagement of the junction box (1300) from the frame (1200) upon the snap-fit attachment being established.
EXAMPLE 21. The junction box (1300) according to any one of EXAMPLEs 17 to 20,
   wherein the second portion (1502) comprises a collar (1315) arranged between an outward-facing side of the second portion (1502) and a contacting interface between a conductor (1320) of the junction box (1300) and an interconnector (1102) of the solar cell module laminate (1100).
EXAMPLE 22. The junction box (1300) according to EXAMPLE 21,
   wherein the collar (1315) comprises a plane surface (1314) for alignment with a back surface of the solar cell module laminate (1100).
EXAMPLE 23. The junction box (1300) according to any one of EXAMPLEs 17 to 22,
   wherein a contacting interface between a conductor (1320) of the junction box (1300) and an interconnector (1102) of the solar cell module laminate (1100) extends in a plane, wherein the first portion (1501) extends perpendicular to and away from the plane.
EXAMPLE 24. The junction box (1300) according to any one of EXAMPLEs 17 to 23,
   wherein the first portion (1501) of the junction box (1300) and the second portion (1502) of the junction box (1300) are in an L-shape.
EXAMPLE 25. The junction box (1300) according to any one of EXAMPLEs 16 to 24,
   wherein the junction box (1300) is configured to provide a spring-force mediated contact between a conductor (1320) of the junction box (1300) and an interconnector of the solar cell module laminate (1100).
EXAMPLE 26. The solar cell module according to any one of EXAMPLEs 8 to 16, comprising the junction box according to any one of EXAMPLEs 17 to 25.
EXAMPLE 27. The solar cell module according to any one of EXAMPLEs 8 to 16 or according to EXAMPLE 26, wherein the solar cell module is manufactured using the method of any one of EXAMPLEs 1 to 7.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, instead of establishing the electrical contact between the interconnector 1102 and the conductor 1320 through an opening in the backside encapsulation layer to expose end portions of the interconnector 1102 towards the backside of the solar cell module laminate, it would also be possible that end portions of the interconnector 1102 are folded back to be offset from the backside of the solar cell module laminate.

For further illustration, while a single junction box has been discussed, a solar cell module may include, e.g., two or four junction boxes, arranged at different sides of the frame and possibly all configured as disclosed herein.

### REFERENCE NUMERALS

solar cell module 1000
solar cell module laminate 1100
wire 1101
interconnector 1102
back surface 1199 of solar cell module laminate
front surface 1198 of solar cell module laminate (for facing towards sun)
frame 1200
recess 1210
passage 1211
wall 1212
groove 1220
plane surface 1221
junction box 1300
housing 1310
cantilever 1311
protrusion 1312, 1313
plane surface 1314
collar 1315
conductor 1320
opening 1329
portion 1501 of the junction box 1300 for attaching to the frame
portion 1502 of the junction box 1300 for attaching to the solar cell module laminate

## Claims

1. A method for manufacturing a solar cell module (1000), the method comprising
- providing a solar cell module laminate (1100),
wherein the solar cell module laminate (1100) includes
a solar cell,
a connecting wire (1101) having a contacting portion electrically contacting a solar cell contact of the solar cell, and
an interconnector (1102), a collecting portion of the interconnector (1102) crossing the connecting wire and electrically contacting the connecting wire,
wherein the solar cell, the connecting wire (1101) and the collecting portion are arranged between a front side encapsulation layer and a back side encapsulation layer,
- providing a frame (1200),
- providing a junction box (1300),
wherein the junction box (1300) comprises a housing (1310) and a conductor (1320),
- at least partially accommodating the junction box (1300) in a recess (1210) of the frame (1200) such that a contacting interface between the conductor (1320) and a connection portion of the interconnector (1102) is arranged in a plane parallel to the solar cell, and
- contactless materially bonding the conductor (1320) to the connection portion of the interconnector (1102).

2. A method for manufacturing a solar cell module (1000), the method comprising
- providing a solar cell module laminate (1100),
wherein the solar cell module laminate (1100) includes
a solar cell,
a connecting wire (1101) having a contacting portion electrically contacting a solar cell contact of the solar cell, and
an interconnector (1102), a collecting portion of the interconnector (1102) crossing the connecting wire and electrically contacting the connecting wire,
wherein the solar cell, the connecting wire (1101) and the collecting portion are arranged between a front side encapsulation layer and a back side encapsulation layer,
- providing a frame (1200),
- providing a junction box (1300),
wherein the junction box (1300) comprises a housing (1310) and a conductor (1320),
- at least partially accommodating the junction box (1300) in a recess (1210) of the frame (1200) such that a contacting interface between the conductor (1320) and a connection portion of the interconnector (1102) is arranged in a plane parallel to the solar cell,
wherein the conductor (1320) and the connection portion of the interconnector (1102) are pressed against each other by a spring force.

3. The method for manufacturing a solar cell module (1000) according to claim 1 or 2,
wherein the connection portion of the interconnector (1102) is contacted by the conductor (1320) through an opening (1329) in one or more outer layers of the solar cell module laminate (1100).

4. A solar cell module (1000), in particular solar cell module (1000) manufactured according to a method for manufacturing a solar cell module (1000) according to any one of the preceding claims, the solar cell module (1000) comprising
- a solar cell module laminate (1100) including a solar cell, a connecting wire (1101) having a contacting portion electrically contacting a solar cell contact of the solar cell, and
- an interconnector (1102), a collecting portion of the interconnector (1102) crossing the connecting wire (1101) and electrically contacting the connecting wire (1101),
wherein the solar cell, the connecting wire (1101) and the collecting portion are arranged between a front side encapsulation layer and a back side encapsulation layer,
- a frame (1200),
- a junction box (1300),
wherein the junction box (1300) comprises a housing (1310) and a conductor (1320),
wherein the junction box (1300) is at least partially accommodated in a recess (1210) of the frame (1200),
wherein the conductor (1320) is in electrical contact with a connection portion of the interconnector (1102),
wherein a contacting interface between the conductor (1320) and the connection portion of the interconnector (1102) is arranged in a plane parallel to the solar cell,
wherein the junction box (1300) abuts the solar cell module laminate (1100) and the frame (1200).

5. The solar cell module (1000) according to claim 4,
wherein the conductor (1320) contacts the connection portion of the interconnector (1102) through an opening (1329) in one or more layers of the solar cell module laminate (1100), the one or more layers optionally comprising the back side encapsulation layer and a backsheet and/or backside glass.

6. A solar cell module (1000) according to claim 4 or 5,
wherein the interconnector (1102) is single layered.

7. The solar cell module (1000) according to any one of claims 4 to 6,
wherein the frame (1200) is configured to impede a movement of the junction box (1300) in a direction perpendicular to the solar cell module laminate (1100).

8. The solar cell module (1000) according to any one of claims 4 to 7,
wherein the junction box (1300) is attached to the frame and held in the frame (1200) in an interlocking manner, in particular using a snap-fit, more particularly a cantilever snap-fit.

9. The solar cell module (1000) according to any one of claims 4 to 8,
wherein a plane surface (1314) of the housing (1300) facing the solar cell module laminate (1100) is aligned with a plane surface (1221) of the frame (1200) facing the solar cell module laminate (1100), in particular with a plane surface of a groove (1220) of the frame (1200).

10. A junction box (1300) comprising a first portion (1501) to be attached to a frame (1200) of a solar cell module (1000) and a second portion (1502) to be attached to a solar cell module laminate (1100) of the solar cell module (1000).

11. The junction box (1300) according to claim 10,
wherein the first portion (1501) comprises multiple protrusions (1312) for fixedly arranging the junction box (1300) in the frame (1200) in an interlocking manner and for impeding relative translational and/or rotational movement of the

12. The junction box (1300) according to claim 10 or 11,
wherein the second portion (1502) comprises a collar (1315) arranged between an outward-facing side of the second portion (1502) and a contacting interface between a conductor (1320) of the junction box (1300) and an interconnector (1102) of the solar cell module laminate (1100).

13. The junction box (1300) according to claim 12,
wherein the collar (1315) comprises a plane surface (1314) for alignment with a back surface of the solar cell module laminate (1100).

14. The junction box (1300) according to any one of claims 10 to 13,
wherein a contacting interface between a conductor (1320) of the junction box (1300) and an interconnector (1102) of the solar cell module laminate (1100) extends in a plane, wherein the first portion (1501) extends perpendicular to and away from the plane.

15. The junction box (1300) according to any one of claims 10 to 14,
wherein the junction box (1300) is configured to provide a spring-force mediated contact between a conductor (1320) of the junction box (1300) and an interconnector of the solar cell module laminate (1100).
